Europäisches Patentamt

European Patent Office

Office européen des brevets

(11) Veröffentlichungsnummer: **0 280 153 B1**

# (12) EUROPÄISCHE PATENTSCHRIFT

(45) Veröffentlichungstag der Patentschrift: **21.11.91**

(51) Int. Cl.⁵: **C08G 64/40**, C08J 3/11

(21) Anmeldenummer: **88102225.5**

(22) Anmeldetag: **16.02.88**

(54) **Verfahren zur Herstellung von Polycarbonatlösungen.**

(30) Priorität: **26.02.87 DE 3706205**

(43) Veröffentlichungstag der Anmeldung:
**31.08.88 Patentblatt 88/35**

(45) Bekanntmachung des Hinweises auf die
Patenterteilung:
**21.11.91 Patentblatt 91/47**

(84) Benannte Vertragsstaaten:
**DE FR GB IT NL**

(56) Entgegenhaltungen:
**EP-A- 0 014 462**
**DE-A- 2 520 861**
**US-A- 3 173 891**
**US-A- 3 492 268**

(73) Patentinhaber: **BAYER AG**

**W-5090 Leverkusen 1 Bayerwerk(DE)**

(72) Erfinder: **Berg, Klaus, Dr.**
**Hansastrasse 124**
**W-4150 Krefeld(DE)**
Erfinder: **Idel, Karsten-Josef, Dr.**
**Am Schwarzkamp 38**
**W-4150 Krefeld(DE)**
Erfinder: **Grigo, Ulrich, Dr.**
**Michelsheide 9**
**W-4152 Kempen 3(DE)**

## Beschreibung

Gegenstand der vorliegenden Erfindung ist ein Verfahren zur Herstellung von Lösungen von Polycarbonaten in organischen, inerten Lösungsmitteln, in dem die nach dem Zweiphasengrenzflächenverfahren erhältliche Emulsion aufgearbeitet wird, dadurch gekennzeichnet, daß beide Phase der Emulsion vor der Aufarbeitung mit 2,5 ppm bis 100 ppm, vorzugsweise mit 5 ppm bis 10 ppm, Phosphorigsäure, bezogen auf das Gewicht des für die Polycarbonatherstellung eingesetzten Diphenols, versetzt werden.

Die aus den erfindungsgemäß erhältlichen Polycarbonatlösungen isolierbaren Polycarbonate haben einen stark reduzierten Eisengehalt, welcher unter der Nachweisgrenze konventioneller Analysenmethoden liegt, also zumindest unter 0,1 ppm.

Thermoplastisches Polycarbonat besitzt einen breiten Anwendungsbereich, besonders in der Spritzgußverarbeitung.

Hierbei ist jedoch insbesondere bei transparenten Einstellungen darauf zu achten, daß die Formmasse keine Verunreinigungen enthält, die bei den hohen Polycarbonatverarbeitungstemperaturen (280 - 350°C) Verfärbungen und Molekulargewichtsabbau hervorrufen. Zu den Verunreinigungen, die in dieser Hinsicht besonders unangenehme Auswirkungen auf Polycarbonat zeigen, zählt das Eisen. Eisen-Gehalte im Polycarbonat von mehr als 0,2 ppm führen beim Erhitzen des Polycarbonats auf über 250°C zu einer mehr oder weniger starken Vergilbung (s. dazu beispielsweise US-A-3 943 101, Spalte 1, Zeilen 12 bis 31). Neben der Vergilbung kann auch ein Molekulargewichtsabbau bei der Verarbeitung, vor allem der mehrmaligen, eintreten.

Deshalb ist es von großem Vorteil, durch das vorliegende erfindungsgemäße Verfahren den Eisengehalt im Polycarbonat auf ein nicht mehr nachweisbares Minimum zu reduzieren.

Aus der japanischen Patentauslegeschrift Nr. 3596/61 ist der Zusatz von phosphoriger Säure als Stabilisator für thermoplastische Polycarbonate bekannt.

Aus der DE-B-1 469 094 ist der Zusatz von Orthophosphorsäure oder von Triphenylphosphit zu thermoplastischen Polycarbonaten vor dem Schmelzen der Polycarbonate bekannt, um deren Wärmestabilität zu verbessern (s. Spalte 4, Zeile 7 bis 49 der DE-B-1 469 094). Verfärbung und Erniedrigung des durchschnittlichen Molekulargewichts sollen durch den Zusatz verhindert werden.

Gemäß der japanischen Patentauslegeschrift 13 775/62 werden Teilester der phosphorigen Säure als Stabilisatoren für thermoplastische Polycarbonate beschrieben.

Gemäß US-A-3 305 520 werden Phosphite als Stabilisatoren gegen Verfärbung den Polycarbonaten zugesetzt.

Gemäß CH-A-456 142 sind phosphorige Säure und Triphenylphosphite als Stabilisatoren für Polycarbonate und Polyalkylenterephthalate genannt (s. Spalte 3, letzter Absatz und Spalte 4, 1. Absatz von CH-A-456 142).

Gemäß US-A-3 404 122 wird Phosphonsäure als Stabilisator gegen den hydrolytischen Abbau den Polycarbonaten zugesetzt.

Gemäß US-A-3 322 719 ist ein Verfahren zum Schutz von Polycarbonaten gegen den schädigenden Einfluß von UV-Strahlen bekannt. Hierbei werden vor dem Zusatz der UV-Stabilisatoren vom Benzophenon-Typ oder Benzotriazol-Typ als zusätzliche Costabilisatoren das Polycarbonat sauer machende Substanzen wie beispielsweise Phosphorsäure zugesetzt.

In allen diesen bekannten Fällen wurden jedoch die phosphorhaltigen Verbindungen den Polycarbonaten zugesetzt. Demgegenüber ist das erfindungsgemäße Reinigungsverfahren für Polycarbonate dadurch charakterisiert, daß die Phosphorsäure nicht in das Polycarbonat einverleibt wird, sondern vielmehr bei der Aufarbeitung der Emulsion in der wäßrigen Phase verbleibt. Dies hat den Vorteil, daß die durch Reste von Phosphorverbindungen im Polycarbonat hervorgerufen verstärkte Hydrolyselabilität des Thermoplasten vermieden wird.

Aus der DE-A-2 252 757 ist bekannt, daß die Herstellung von Polycarbonaten nach dem Phasengrenzflächenverfahren in Gegenwart von 0,01 bis 5 Gew.-% eines Erdalkalihypophosphits oder eines Alkalihypophosphits durchgeführt werden kann, wobei die Gewichtsprozente auf das Gewicht des in der Reaktion verwendeten zweiwertigen Phenols bezogen sind. Die resultierenden Polycarbonate sind farbstabiler, wobei hervorgehoben wird, daß der Zusatzstoff, also das Hypophosphit nicht in dem Polycarbonat verbleibt (Seite 2, letzter Absatz der DE-A-2 252 757).

In der Anmeldung wird jedoch nichts über die effektive Reduzierung des Fe-Gehalts im Polycarbonat ausgesagt. Zudem ist das Verfahren gegenüber dem vorliegenden aufgrund der eingesetzten Menge an Hypophosphit (bezogen auf das Bisphenol) wenig effizient.

Aus dem US-A-3 943 101 ist die Verminderung des Eisengehalts von Polycarbonaten bekannt, indem die Polycarbonatsynthese nach dem Phasengrenzflächenverfahren in Gegenwart von Gluconsäure oder ihres Alkalisalzes durchgeführt wird. Dieses Verfahren ist jedoch gegenüber dem vorliegenden erfindungsgemäßen Verfahren weniger effizient, da bezogen auf das eingesetzte Bisphenol erheblich größere Menge des Komplexierungsmittels eingesetzt weden müssen; trotzdem kann der Fe-Gehalt des Polycarbonats nicht unter 0,1 ppm gesenkt werden.

Thermoplastische, aromatische Polycarbonate im Sinne der vorleigenden Erfindung sind bekannt (s. beispielsweise "H. Schnell, Chemistry and Physics of Polycarbonates, Interscience Publishers, New York, 1964).

Es sind die Umsetzungsprodukte von Bisphenolen, insbesondere Dihydroxydiarylalkanen mit Phosgen oder Diestern der Kohlensäure, wobei außer den unsubstituierten Dihydroxydiarylethanen auch solche einzubeziehen sind, deren Arylreste in o- und/oder m-Stellung zur Hydroxylgruppe Methylgruppen oder Halogenatome tragen. Ebenso sind verzweigte Polycarbonate einzubeziehen.

Die aromatischen Polycarbonate haben mittlere Gewichtsmittel-Molekulargewichte $\overline{M}_w$ zwischen 10.000 und 100.000, vorzugsweise zwischen 15.000 und 40.000, ermittelt durch Messungen der rel. Viskosität in $CH_2Cl_2$ bei 25°C.

Geeignete Diphenole sind z. B. Hydrochinon, Resorcin, 4,4'-Dihydroxydiphenyl, Bis-(hydroxyphenyl)alkane wie beispielsweise $C_1$-$C_8$-Alkylen- bzw. $C_2$-$C_8$-Alkylidenbisphenole, Bis-(hydroxy-phenyl)-cycloalkane wie beispielsweise $C_5$-$C_{15}$-Cycloalkylidenbisphenole, Bis-(hydroxy)-sulfide, -ether, -ketone, -sulfoxide oder -sulfone. Ferner $\alpha,\alpha'$-Bis-(hydroxy-phenyl)-diisopropylbenzol sowie die entsprechenden kernalkylierten bzw. kernhalogenierten Verbindungen. Bevorzugt sind Polycarbonate auf Basis Bis-(4-hydroxy-phenyl)-propan-2,2 (Bisphenol A), Bis-(4-hydroxy-3,5-dichlor-phenyl)-propan-2,2 (Tetrachlorbisphenol A), Bis-(4-hydroxy-3,5-dibrom-phenyl)-propan-2,2- (TetrabrombisphenolA), Bis-(4-hydroxy-3,5-dimethylphenyl)-propan-2,2 (Tetramethylbisphenol A), Bis-(4-hydroxy-phenyl)-cyclohexan-1,1 (Bisphenol Z) sowie auf Basis von Dreikernbisphenolen wie $\alpha,\alpha'$-Bis-(4-hydroxyphenol)-p-diisopropylbenzol. Weitere Bisphenole sind beispielsweise in den US-Patenten 3 028 365 und 3 275 601 beschrieben.

Als Molekulargewichtsregler können vor allem monfunktionelle Phenole (z. B. Phenol, p-tert.-Butylphenol, p-Isooctylphenol) eingesetzt werden.

Die Herstellung dieser Polycarbonate nach dem Phasengrenzflächenverfahren ist ebenfalls seit langem bekannt (s. beispielsweise wiederum "H. Schnell, Chemistry and Physics of Polycarbonates" loc. cit.). Hierbei wird beispielsweise wie folgt verfahren:
Der erfindungsgemäße Zusatz der Phosphorigsäure erfolgt nach Beendigung der Aufkondensation zum hochmolekularen Polycarbonat zur erhaltenen Emulsion vor deren Trennung, Reinigung und Aufarbeitung.

Aus den erhaltenen Polycarbonatlösungen können die thermoplastischen Polycarbonate in üblicher Weise isoliert werden, beispielsweise durch Fällung mit Isooctan.

Die so hergestellten thermoplastischen Polycarbonate können in ihrem üblichen technischen Anwendungsbereich eingesetzt werden.

Beispiel 1

30 1 destilliertes Wasser, 22,8 kg Bisphenol A, 1,8 kg Natriumhydroxid, 34,5 g Phenol und 25 1 Methylenchlorid werden in einem gläsernen Reaktionskessel, der mit Rührer und Rückflußkühler ausgerüstet, vorgelegt. Unter kräftigem Rühren werden nun 1,6 kg Phosgen unter Beibehaltung eines pH-Wertes von 12 - 13 (durch Zugabe von Natronlauge) eingeleitet. Danach werden 15 ml Triethylamin zur Emulsion gegeben. Nach 20minütigem Nachrühren fügt man 0,12 g $H_3PO_3$ - (= 0,00053 % bezogen auf Bisphenol A) hinzu, rührt für weitere 5 Minuten und arbeitet anschließend wie üblich auf:

1. Abtrennen der wäßrig-alkalischen von der $CH_2Cl_2$-Phase,
2. Waschen der $CH_2Cl_2$-Phase zunächst mit $H_2O$, dann mit 10 %iger Phosphorsäure ($H_3PO_4$),
3. Neutralwäsche mit $H_2O$, anschließend Abtrennung der $CH_2Cl_2$-Phase,
4. Isolierung des Polycarbonats durch Fällung mit Isooctan.

Das Molekulargewicht des Polycarbonats beträgt, gelpermeatochromatigraphisch gemessen, $\overline{M}_w$ = 29.000. Der Eisengehalt des Polycarbonats ist < 0,1 ppm, gemessen mit einem induktiv gekoppelten Plasmaspektrometer der Firma Contron (ES 750).

Vergleichsbeispiel 1

Bis auf den Phosphorigsäure-Zusatz wurde ein zu Beispiel 1 identischer Polycarbonat-Ansatz gefahren (Molekulargewicht des Polycarbonats, mittels GPC bestimmt: $\overline{M}_w$ = 29.000).

Eisengehalt des Polycarbonats (Bestimmung s. Beispiel 1): 0,75 ppm.

**Patentansprüche**

1. Verfahren zur Herstellung von Lösungen von Polycarbonaten in organischen, inerten Lösungsmitteln, in dem die nach dem Zweiphasengrenzflächenverfahren erhältliche Emulsion aufgearbeitet wird, dadurch gekennzeichnet, daß beide Phasen der Emulsion vor der Aufarbeitung mit 2,5 ppm bis 100 ppm Phosphorigsäure, bezogen auf das Gewicht des für die Polycarbonatherstellung eingesetzten Diphenols, versetzt werden.

2. Verfahren gemäß Anspruch 1, dadurch gekennzeichnet, daß man die Emulsion mit 5 ppm bis 10 ppm Phosphorigsäure versetzt.

## Claims

1. A process for the production of solutions of polycarbonates in organic inert solvents, in which the emulsion obtainable by the two-phase interfacial method is worked up, characterized in that 2.5 ppm to 150 ppm phosphorous acid, based on the weight of the diphenol used in the production of the polycarbonates, are added to both phases of the emulsion before working up.

2. A process as claimed in claim 1, characterized in that 5 ppm to 10 ppm phosphorous acid are added to the emulsion.

## Revendications

1. Procédé de préparation de solutions de polycarbonates dans des solvants organiques inertes dans lequel on part de l'émulsion obtenue après la réaction à l'interface de deux phases, caractérisé en ce que l'on ajoute aux deux phases de l'émulsion, avant les opérations ultérieures, 2,5 ppm à 100 ppm d'acide phosphoreux par rapport au poids du diphénol mis en oeuvre à la préparation du polycarbonate.

2. Procédé selon la revendication 1, caractérisé en ce que l'on ajoute à l'émulsion 5 à 10 ppm d'acide phosphoreux.